# EUROPEAN PATENT APPLICATION

(11) **EP 4 768 833 A1**
(43) Date of publication of application: **01.07.2026**
(21) Application number: 24867922.7
(22) Date of filing: 31.07.2024
(51) Int. Cl.: F27B 3/08, C21B 11/10, C21C 5/52

(54) **ELECTRIC FURNACE EQUIPMENT**

(30) Priority: 19.09.2023 JP 2023151449
(71) Applicant: JFE Steel Corporation, Tokyo, 100-0011 (JP)
(72) Inventor: ODA, Nobuhiko, Tokyo 100-0011 (JP); KIYOIZUMI, Kota, Tokyo 100-0011 (JP); MIWA, Yoshihiro, Tokyo 100-0011 (JP); KAWABATA, Ryo, Tokyo 100-0011 (JP)
(74) Representative: Hoffmann Eitle
(86) International application number: PCT/JP2024/027264
(87) International publication number: WO 2025/062841

(57) **Abstract**

Provided is an electric furnace equipment/system that prevents overheating of molten metal by converting heat transfer between the molten metal and slag from thermal conduction to forced convection, thereby improving productivity without requiring oversized equipment. The electric furnace equipment/system is configured to accommodate molten metal, slag, a metal raw material, and an auxiliary raw material in stacked layers, and to discharge the molten metal and slag. The electric furnace equipment/system comprises: an arc furnace having a bottom portion, a furnace wall, and a furnace cover; and an electromagnetic stirrer disposed at a predetermined position at the bottom portion or on the side wall of the arc furnace to enable stirring of the molten metal within the arc furnace.

## Description

### Technical Field

The present invention relates to an electric furnace equipment/system for producing molten metal by melting a metal raw material containing reduced iron. In the following description, the unit "t" of mass represents 10³ kg, and the unit "L" of volume represents 10⁻³ m³. Symbol "N" added to the unit of the volume of a gas represents the volume of the gas under standard conditions, that is, at a temperature of 0°C and a pressure of 101325 Pa. In this specification, the numerical range "x to y" represents the range of x to y, both inclusive.

### Background Art

In recent years, there has been a growing demand to reduce CO₂ emissions to mitigate environmental burdens. In the steel industry as well, the production of iron sources through the direct reduction (DR) process, instead of the blast furnace process that involves significant CO₂ emissions, is drawing attention. The DR process produces direct reduced iron (DRI) by reducing iron-containing agglomerates in a shaft furnace, for example. This reduced iron, along with other iron source raw materials such as iron scrap, is charged into an electric arc furnace (EAF) or a submerged arc furnace (SAF), for example, where the mixture is heated and melted, and slag is subsequently separated to yield molten iron.

In Japan, studies are being conducted to apply low-grade iron ore, such as that produced in Australia or India, to the DR process. With the currently available EAFs, it is difficult to perform melting of reduced iron produced from low-grade iron ore as a raw material. Thus, the use of submerged arc furnaces (SAFs) is being considered.

The production of molten iron with a SAF is a process of continuously supplying metal materials, such as scrap, pig iron, direct reduced iron (DRI), hot metal, or hot briquetted iron (HBI), and auxiliary raw materials into a submerged arc furnace (SAF) without opening its furnace cover, or charging the materials into the furnace using small buckets. This SAF melting process may be performed through flat bath operation. While the raw materials are charged into the submerged arc furnace, electrodes are inserted into slag to generate arcs between the plurality of electrodes or between an electrode and molten iron, and also, a current is passed through the raw materials and the slag. As a result, the raw materials are heated to melt through resistance heating and heat transfer.

One problem with the SAF melting process is the low efficiency of heat transfer to raw materials located away from the electrodes. For example, the process causes issues, such as a delay in the melting of metal raw materials, concentration gradients, unreliable temperature measurement, unreliable process control, and tapping of the molten metal at excessively high temperatures. To address such issues associated with non-uniform temperatures, electromagnetic stirrer disclosed in Patent Literature 1 has been developed.

### Citation List

### Patent Literature

Patent Literature 1: Japanese Translation of PCT International Application Publication No. 2020-505579

### Summary of Invention

### Technical Problem

However, the conventional techniques have the following problems. That is, the technique described in Patent Literature 1 is applied to so-called electric arc furnaces. In electric arc furnaces, the proportion of slag is low, and thus, an operation is performed with a high Fe content. Accordingly, the technique cannot be directly applied to a case in which molten metal, slag, a metal raw material, and an auxiliary raw material are accommodated in stacked layers within an electric furnace, and the molten metal and the slag are individually and continuously discharged to perform an operation under a reducing atmosphere.

The present invention has been made in view of the foregoing circumstances, and an object of the present invention is to provide an electric furnace equipment/system capable of achieving high productivity by converting the heat transfer between the molten metal and slag from thermal conduction to forced convection, thereby suppressing overheating of the molten metal while improving productivity without requiring oversized equipment/system.

### Solution to Problem

An electric furnace equipment/system according to the present invention, which advantageously solves the foregoing problems, is configured to accommodate molten metal, slag, a metal raw material, and an auxiliary raw material in stacked layers and to discharge the molten metal and the slag, characterized in that the electric furnace equipment/system includes: an arc furnace having a bottom portion, a furnace wall, and a furnace cover; and an electromagnetic stirrer disposed at a predetermined position at the bottom portion or the side wall of the arc furnace, the electromagnetic stirrer being configured to stir the molten metal within the arc furnace.

It should be noted that the method for operating an electric furnace equipment/system according to the present invention may include the following features, for example, that are considered to be more preferable solution means.
(a) Melting is performed without an intentional supply of oxygen gas.
(b) The electromagnetic stirrer includes at least one coil configured to perform one or more of the following in combination: generate a unidirectional linear travelling magnetic field; generate a travelling magnetic field directed from a center of the furnace bottom toward the furnace wall or from the furnace wall toward the center of the furnace bottom; and generate a magnetic field that produces an azimuthal swirling flow in the molten metal.
(c) A discharge port for the molten metal and a discharge port for the slag are provided in the furnace wall in different directions with respect to a center of a furnace bottom.
(d) The arc furnace has a capacity such that an input power per unit surface area of molten metal is 300 kW/m² or greater, and the electromagnetic stirrer has a stirring power density in the range of 4 to 80 W/t.
(e) The electric furnace equipment/system is provided with an apparatus that can supply the metal raw material and auxiliary raw material either individually or in mixture.
(f) The metal raw material is composed partially or entirely of reduced iron.
(g) A basicity of the slag is in the range of 1.0 to 1.5, where the basicity of the slag is defined as a mass ratio of CaO to SiO₂ in the slag.
(h) The arc furnace includes a control device configured to control an arc voltage, which is a ground voltage, and an arc current per electrode, the control device being further configured to adjust at least one of an electrode height, the arc voltage, and the arc current such that a value of E/√I, obtained by dividing the arc voltage E (V) by a square root of the arc current I (A) per electrode is 2.0 or less.
(i) The arc furnace is a submerged arc furnace.

### Advantageous Effects of Invention

The electric furnace equipment/system according to the present invention includes an arc furnace, and an electromagnetic stirrer disposed at the bottom thereof, and is configured to appropriately stir the molten metal, thereby enabling the application of sufficiently high input power to suppress a temperature rise of the molten metal. In addition, it is possible to produce a molten metal with high productivity while reducing the wear of refractory material.

### Brief Description of Drawings

[Fig. 1] is a schematic longitudinal sectional view illustrating an electric furnace equipment/system according to an embodiment of the present invention, in which
[Fig. 2] (a) to (g) are schematic top views illustrating examples of arrangements of the electromagnetic stirrer of the electric furnace equipment/system according to the above embodiment.
[Fig. 3] is a graph representing the influence of the stirring power density for hot metal on the relationship between the input power per unit surface area of the hot metal in an electric furnace and the temperature of the hot metal.
[Fig. 4] is a schematic longitudinal sectional view representing a submerged arc furnace that does not include a function for stirring molten metal.

### Description of Embodiments

Hereinafter, an embodiment of the present invention will be specifically described. The following embodiment only illustrates examples of a facility and a method for embodying the technical idea of the present invention. Thus, the configuration of the present invention is not limited thereto. That is, the technical idea of the present invention may be changed in various ways within the technical scope recited in the claims.

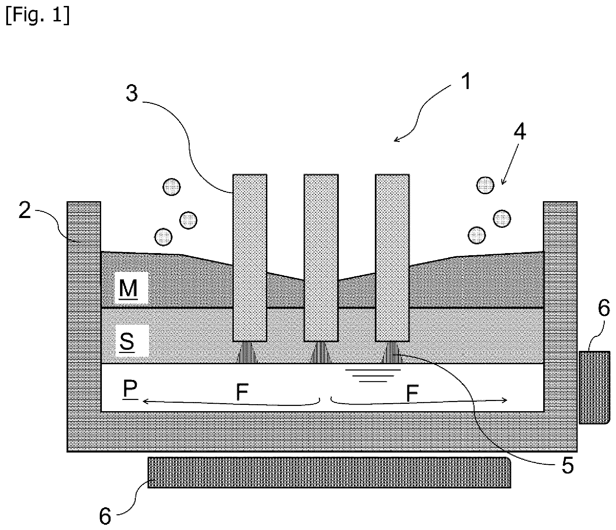

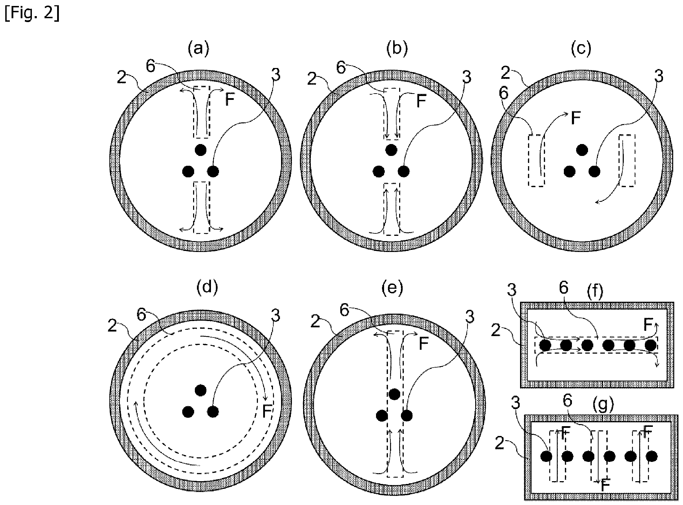

Fig. 1 is a schematic longitudinal sectional view illustrating the configuration of a submerged arc furnace for use in an electric furnace according to an embodiment of the present invention. Fig. 2 (a) to (g) illustrates an example of the arrangement of an electromagnetic stirrer 6 formed of a linear motor. The submerged arc furnace 1 accommodates hot metal P, slag S, and raw materials M, which include a metal raw material and an auxiliary raw material, in stacked layers on the inner side of a furnace wall 2. In the submerged arc furnace 1, electrodes 3 are inserted into the slag S to cause arcs to be generated either between the plurality of electrodes 3 or between an electrode 3 and the hot metal P, thereby heating and melting the raw materials through radiation heating without the intentional supply of oxygen gas. Alternatively, the raw materials are heated and melted through resistance heating, also without the intentional supply of oxygen gas, by allowing a current to flow between the electrodes, the raw materials, the slag, and the hot metal. The phrase "without intentional supply of oxygen" herein does not exclude the mixing of air during the charging of the raw materials, from a gas blown into the furnace, or through gaps in refractory material, for example. It means that oxidation heat is not utilized to heat the raw materials.

In the present embodiment, it is preferable to continuously produce molten metal using a device (not shown) for charging a raw material 4 from above, such as a hopper, for example. Preferably, the position for charging the raw material should be symmetrically arranged with respect to the center of the furnace bottom. In this case, the submerged arc furnace 1 preferably has a discharge port for the molten metal and a discharge port for the slag that are arranged to face different directions with respect to the center of the furnace bottom. It is also preferable to fill each discharge port with a plugging material and, when a predetermined amount of molten metal has been retained, discharge the molten metal by penetrating the plugging material to open the discharge port.

In the present embodiment, an iron source raw material containing reduced iron is charged into the submerged arc furnace. Along with this, as an auxiliary raw material, at least one of a slag-forming additive for adjusting the basicity (CaO/SiO₂) of the slag S formed on the hot metal P, and a carbonaceous additive for adjusting the C content in the hot metal P are added. The basicity (CaO/SiO₂) of the slag is the mass ratio of CaO to SiO₂ in the slag. The device for charging the raw material 4 may be provided separately for each of the iron source material, slag-forming additive, and carbonaceous additive, or may supply a mixture of these materials. When mixing is performed, the materials may be granulated to a predetermined size.

The reduced iron used in the present invention may be previously produced by the direct reduction process. Alternatively, commercially available reduced iron may be purchased for use. It is also possible to use iron scrap or scale as the iron source raw material. The mass percentage of the reduced iron in the iron source raw material is preferably 50 to 100%.

When the metallization ratio of the reduced iron is 60% or greater, the specific energy consumption becomes low, resulting in excellent energy efficiency. The upper limit of the metallization ratio is not particularly restricted. If the metallization ratio is excessively high, reduced iron, which is the raw material 4 charged into the submerged arc furnace 1 from above the slag S, may become electrically conductive within the slag, which may decrease the resistance heat. Thus, the upper limit of the metallization ratio is preferably set to about 90%.

As the slag-forming additive, it is preferable to add limestone (CaCO₃) or quicklime (CaO) as a CaO source, and silica (SiO₂) as a SiO₂ source. The slag-forming additive may be in lump form or powder form, and is preferably used either in combination with, or by being mixed with the metal raw material, for example, by granulation. The basicity (CaO/SiO₂) of the slag S is preferably set within the range of 1.0 to 1.5. When the basicity of the slag is within this range, the composition of the slag becomes similar to that of blast furnace slag, making it suitable for reuse as a base course material, such as cement. In addition, the total iron content in the slag is preferably 5.0 mass% or less. This can be achieved by intentionally suppressing the supply of oxygen gas, which improves the iron yield.

As the carbonaceous additive, coke or coal can be used. Biomass charcoal may also be used. The carbonaceous additive may be in lump form or powder form, and is preferably used in combination with, or by being mixed with the metal raw material, for example, by granulation. The C content in the hot metal P is preferably adjusted to be within the range of 2.0 to 5 mass%. When the C content in the hot metal P falls within this range, the hot metal P can be suitably used as pig iron, either directly or as a steelmaking raw material for the next step.

In the present embodiment, electrical energy is used to melt the metal raw material, for example, reduced iron. Thus, the effect of reducing CO₂ emissions can be obtained as compared to a case where combustion heat of carbon is used, such as in the blast furnace process. It is preferable to use electrical energy generated from renewable energy sources.

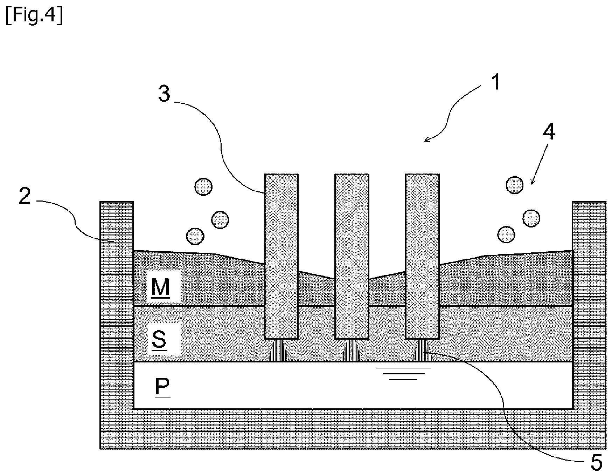

When a method for operating an electric furnace for producing molten metal is performed as in the present embodiment, using a submerged arc furnace that does not have a function for stirring molten metal, such as the one illustrated in Fig. 4, the following problems may arise. In such a submerged arc furnace, there is no oxygen supply from the outside, and no solid or liquid flow is generated within the furnace body. Thus, heat transfer from the hot metal P to the raw materials M via the slag S occurs almost exclusively by thermal conduction. In addition, the electrodes 3 are typically arranged at the center when viewed from above. Thus, heat supply to the raw materials M located away from the electrode is limited. Even if the input power is increased, most of the input power is consumed in heating the molten metal, leaving only a small amount available for melting the raw materials M, and in particular, the amount of heat supplied to the raw materials M located away from the electrodes 3 is small. The temperature of the hot metal reaches 1500°C or greater at a power flux density of approximately 250 kW/m² per unit surface area of the hot metal. Therefore, submerged arc furnaces are typically operated at a power flux density of approximately 250 kW/m² per unit surface area of hot metal. If a large amount of molten metal is to be produced using such furnaces, a large number of large-scale facilities are required, resulting in a substantial capital investment.

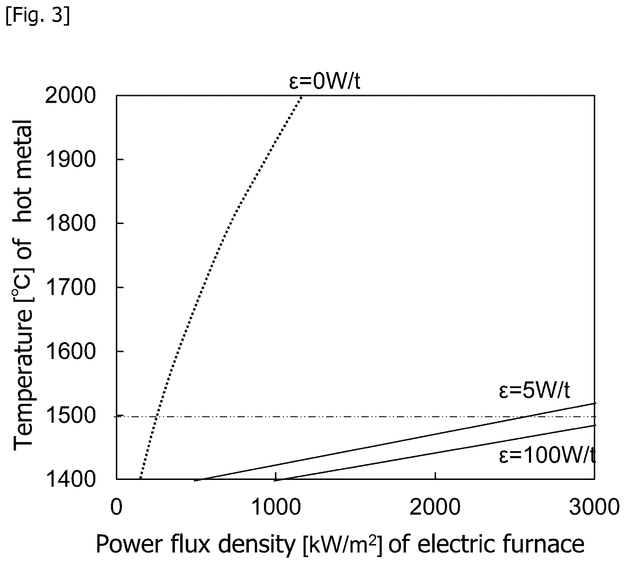

As a result of thorough examinations, the inventors have found that the relationship between the power flux density per unit surface area of hot metal and the temperature of the hot metal P depends on the stirring power ε . Fig. 3 shows the results of the examinations. For example, in a typical submerged arc furnace, the stirring power density is ε = 0, which can explain why conventional submerged arc furnaces are operated at about 250 kW/m². In addition, the inventors have newly found that applying even a small amount of stirring power can input a large amount of power into the furnace without increasing the temperature of the hot metal P.

The submerged arc furnace 1 of the present embodiment includes a bottom portion, the furnace wall 2, a furnace cover (not illustrated), and an electromagnetic stirrer 6 as a stirring means for molten metal. The submerged arc furnace 1 according to the present embodiment is preferably configured to have a capacity such that the input power per unit surface area of molten metal is 300 kW/m² or greater. In addition, the stirring power density of the electromagnetic stirrer 6 is preferably in the range of 4 to 80 W/t. This can achieve high productivity and stable operation without an enormous investment in facilities. The input power per unit surface area of molten metal is preferably set in the range of 300 to 2500 kW/m². The stirring power density is preferably set in the range of 8 to 24 W/t.

If the stirring power density is below the lower limit, the extremely low stirring power density may cause overheating of the molten metal within the required power flux density range, resulting in accelerated wear of the refractory material of the furnace wall, for example. Conversely, if the stirring power density exceeds the upper limit, the flow speed of the molten metal may become too high, which may cause accelerated wear of the refractory material.

As an example of the stirring means for molten metal, it is preferable to dispose the electromagnetic stirrer 6, such as the one illustrated in Fig. 1, at the bottom portion or on the side surface. The bottom portion or side surface where the electromagnetic stirrer 6 is disposed is preferably formed of a non-magnetic material. The stirring power density of electromagnetic stirring can be determined through numerical analysis or experimentation, for example, relative to the output of the electromagnetic stirring. For example, the stirring power density of electromagnetic stirring can be set to about 0.5% of the output power of the electromagnetic stirring.

In the present embodiment, it is preferable that the flow F of the molten metal enhance heat transfer to the slag-metal interface. It is also preferable that the flow of molten metal around the electrodes, where hot spots tend to form, be directed toward the furnace wall. For example, as shown in Fig. 2(a), the electromagnetic stirrer 6 may be arranged either at the furnace bottom or on the furnace wall to generate a magnetic field such that the flow F of the molten metal located near the furnace bottom moves from the center of the furnace bottom to the furnace wall. Alternatively, as shown in Fig. 2(b), the electromagnetic stirrer 6 may be arranged either at the furnace bottom or on the furnace wall to generate a magnetic field such that the flow F of the molten metal located near the furnace bottom moves from the furnace wall to the center of the furnace bottom. In addition, as shown in Fig. 2(c), the electromagnetic stirrers 6 may be arranged facing each other across the center of the furnace bottom to generate travelling magnetic fields in different directions. Furthermore, as shown in Fig. 2(d), the electromagnetic stirrers 6 may be arranged in the circumferential direction to generate a swirling flow in the molten metal. A unidirectional linear travelling magnetic field may also be generated, as shown in Figs. 2(e) and 2(f). The shape of the electric furnace, when viewed from above, is not limited to a circular form; it may also be elliptical or rectangular, as shown in Figs. 2(f) and 2(g). As illustrated in Fig. 2(g), the travelling magnetic fields of adjacent electromagnetic stirrers 6 may be set in opposite directions.

The submerged arc furnace 1 of the present embodiment preferably includes a control device that controls an arc voltage, which is a ground voltage, and a current per electrode. In the submerged arc furnace, current flows between the electrodes, the raw materials, the slag, and the hot metal. Thus, compared to an electric furnace that generates arcs in the air, the ground voltage typically becomes lower when the same value of current is supplied. This is due to the significantly higher electrical conductivity of the slag compared to that of the air. Therefore, the control device in the submerged arc furnace 1 according to the present embodiment uses an index E/√I, obtained by dividing the arc voltage E (V) by the square root of the current I (A) per electrode. That is, the control device is preferably configured to adjust at least one of the electrode height, the arc voltage, and the arc current so that the index E/√I is 2.0 or less. More preferably, the index E/√I is set to 1.5 or less.

### Example

Inspections were conducted using the submerged arc furnace 1 having a capacity of 4 to 6 tons, such as the one illustrated in Fig. 1. Table 1 summarizes the specifications of a three-phase AC electric furnace as the arc furnace used in the inspections.

**[Table 1]**

| Item | Electric furnace |
|---|---|
| Power supply | Three-phase AC |
| Capacity of transformer | 4.0 MVA |
| Electrodes | Graphite electrodes |
| Electrode diameter | 16 inch(0.41m) |
| Number of electrodes | 3 |
| Outer diameter/ Height | 3.1m/2.6m |

Shredder scrap, a carbonaceous additive and blast furnace slag were charged into the submerged arc furnace 1, and a current was passed through the furnace to perform initial melting. The amounts of the materials previously charged into the furnace were adjusted to produce 750 kg of hot metal and 1500 kg of slag. Once the materials previously charged had completely melted, a preblended raw material mixture of reduced iron, as a main raw material, and an auxiliary raw material, such as a carbonaceous additive, lime, alumina, and an MgO source, for adjusting the C concentration in the hot metal and the composition of slag, was continuously charged into the furnace. The target maximum amount of the hot metal was set to 4 tons, and was adjusted based on the amounts of the raw materials charged into the furnace. The final thickness of the hot metal reached 140 mm.

The input power of the submerged arc electric furnace was controlled by adjusting the tap voltage and the electrode position, and the power was adjusted to satisfy predetermined conditions.

A transformer with a 200 kVA rating was used for an electromagnetic stirring device, and its output was adjusted. The power factor at the maximum output was approximately 50%, allowing for a maximum output of about 100 kW. Since it is difficult to directly measure the value of the contribution rate of electromagnetic stirring, it was calculated using a numerical analysis method in advance and set to 0.5%. This value is a typical value for electromagnetic stirring devices and does not vary significantly. The electromagnetic stirrer was arranged as in Fig. 2(e). Table 2 presents the operating conditions.

In the column of "Determination," the wear amount (mm) of the refractory material was evaluated, where the wear amount under the conditions of Test No. 1 was normalized to 1. A rating of "Good" was given to test cases where the resulting wear amount was less than twice that of Test No. 1 and 4 tons of hot metal could be produced within 100 minutes. Even when the input power to the electric furnace was the same, cases in which the melting time was shortened or the refractory wear was reduced due to electromagnetic stirring were rated as "Fair". Table 2 also shows the value of the index E/√I during operation.

**[Table 2]**

| No. | Stirring | Power of electric furnace | Electric density | Electromagnetic stirring power | Stirring power density | Wear amount of refractory material | Melting time | E/√I | Determination | Remarks |
|---|---|---|---|---|---|---|---|---|---|---|
| | Means | kW | kW/m² | kW | W/t | - | min | V/√A | | |
| 1 | None | 1420 | 280 | 0 | - | 1.0 | 114 | 0.89 | Poor | Comparative Example |
| 2 | None | 2790 | 550 | 0 | - | 4.0 | 75 | 1.09 | Poor | Comparative Example |
| 3 | None | 3550 | 700 | 0 | - | 9.0 | 61 | 1.19 | Poor | Comparative Example |
| 4 | Electromagnetic | 1420 | 280 | 20 | 25 | 0.9 | 110 | 0.89 | Fair | Inventive Example |
| 5 | Electromagnetic | 2790 | 550 | 1 | 1.3 | 3.5 | 72 | 1.09 | Fair | Inventive Example |
| 6 | Electromagnetic | 2790 | 550 | 5 | 6.3 | 1.3 | 71 | 1.09 | Good | Inventive Example |
| 7 | Electromagnetic | 2790 | 550 | 40 | 50 | 1.7 | 71 | 1.09 | Good | Inventive Example |
| 8 | Electromagnetic | 3550 | 700 | 100 | 125 | 3.1 | 63 | 1.19 | Fair | Inventive Example |
| 9 | Electromagnetic | 3550 | 700 | 20 | 25 | 1.4 | 58 | 1.19 | Good | Inventive Example |
| 10 | Electromagnetic | 3550 | 700 | 100 | 125 | 3.0 | 54 | 1.19 | Fair | Inventive Example |

### Reference Signs List

- 1: electric furnace (submerged arc furnace, SAF)
- 2: furnace wall
- 3: electrode
- 4: (charged) raw material
- 5: arc
- 6: electromagnetic stirrer (linear motor)
- P: hot metal
- S: slag
- M: raw materials

## Claims

1. An electric furnace equipment/system configured to accommodate molten metal, slag, a metal raw material, and an auxiliary raw material in stacked layers and discharge the molten metal and the slag, **characterized in that**
the electric furnace equipment/system comprises:
an arc furnace having a bottom portion, a furnace wall, and a furnace cover; and
an electromagnetic stirrer disposed at a predetermined position at the bottom portion or on the side wall of the arc furnace, the electromagnetic stirrer being configured to stir the molten metal within the arc furnace.

2. The electric furnace equipment/system according to claim 1, wherein
melting is performed without an intentional supply of oxygen gas.

3. The electric furnace equipment/system according to claim 1, wherein
the electromagnetic stirrer comprises at least one coil configured to perform one or more of the following in combination:
generate a unidirectional linear travelling magnetic field;
generate a travelling magnetic field directed from a center of the furnace bottom toward the furnace wall or from the furnace wall toward the center of the furnace bottom; and
generate a magnetic field that produces an azimuthal swirling flow in the molten metal.

4. The electric furnace equipment/system according to claim 1, wherein
a discharge port for the molten metal and a discharge port for the slag are provided in the furnace wall in different directions with respect to a center of a furnace bottom.

5. The electric furnace equipment/system according to claim 1, wherein
the arc furnace has a capacity such that an input power per unit surface area of molten metal is 300 kW/m² or greater, and the electromagnetic stirrer has a stirring power density in a range of 4 to 80 W/t.

6. The electric furnace equipment/system according to claim 1, wherein
the electric furnace equipment/system is provided with an apparatus that can supply the metal raw material and the auxiliary raw material either individually or in mixture.

7. The electric furnace equipment/system according to claim 6, wherein
the metal raw material is composed partially or entirely of reduced iron.

8. The electric furnace equipment/system according to claim 1, wherein
a basicity of the slag is in a range of 1.0 to 1.5, where the basicity of the slag is defined as a mass ratio of CaO to SiO₂ in the slag.

9. The electric furnace equipment/system according to claim 1, wherein
the arc furnace includes a control device configured to control an arc voltage, which is a ground voltage, and an arc current per electrode,
the control device being further configured to adjust at least one of an electrode height, the arc voltage, and the arc current such that a value of E/√I, obtained by dividing the arc voltage E (V) by a square root of the arc current I (A) per electrode is 2.0 or less.

10. The electric furnace equipment/system according to claim 1, wherein
the arc furnace is a submerged arc furnace.
